(19) Europäisches Patentamt / European Patent Office / Office européen des brevets

(11) **EP 1 978 276 A1**

(12) **DEMANDE DE BREVET EUROPEEN**

(43) Date de publication:
**08.10.2008 Bulletin 2008/41**

(51) Int Cl.:
*F16F 9/348* *(2006.01)*    *F16F 9/50* *(2006.01)*

(21) Numéro de dépôt: **08305085.6**

(22) Date de dépôt: **04.04.2008**

| | |
|---|---|
| (84) Etats contractants désignés:<br>**AT BE BG CH CY CZ DE DK EE ES FI FR GB GR HR HU IE IS IT LI LT LU LV MC MT NL NO PL PT RO SE SI SK TR**<br>Etats d'extension désignés:<br>**AL BA MK RS**<br><br>(30) Priorité: **05.04.2007  FR 0754323** | (71) Demandeur: **PEUGEOT CITROËN AUTOMOBILES S.A.**<br>**78140 Vélizy Villacoublay (FR)**<br><br>(72) Inventeur: **Groult, Antonin**<br>**90000 Belfort (FR)** |

(54) **Valve hydraulique, amortisseur hydraulique équipé d'une telle valve et ensemble formé de deux amortisseurs couplés entre eux**

(57)    L'invention concerne une valve hydraulique (1) destinée à contrôler le passage de fluide hydraulique entre une première (11) et une deuxième (12) chambres hydrauliques, consistant en :
- un premier corps creux (4) délimitant intérieurement la deuxième chambre (12), ladite deuxième chambre (12) débouchant à une extrémité (41) dudit corps creux (4) dans la première chambre (11) ;
- un obturateur (3) formé d'au moins un diaphragme (30) élastiquement déformable en appui sur l'extrémité débouchante (51) dudit corps creux (4) ;
- un deuxième corps creux (5) délimitant intérieurement une troisième chambre (13) remplie de fluide hydraulique et délimitée partiellement par ledit diaphragme (30), ladite troisième chambre (3) étant sous une pression ($P_3$) prédéterminée apte à contrôler la raideur et le point d'ouverture de la valve (1)

L'invention trouve une application dans les amortisseurs à compensation adaptable pour véhicule automobile.

**Fig. 4**

EP 1 978 276 A1

## Description

La présente invention concerne une valve hydraulique, destinée à contrôler le passage de fluide entre une première et une deuxième chambre.

Elle concerne plus particulièrement une valve hydraulique comprenant au moins un diaphragme élastiquement déformable et dont la raideur est pilotée par la pression régnant dans une troisième chambre.

Cette valve hydraulique est préférentiellement destinée à former module de compensation dans un amortisseur hydraulique à compensation adaptable pour véhicule, notamment pour véhicule automobile. L'invention porte également sur un ensemble formé de deux tels amortisseurs couplés entre eux ; le premier amortisseur comprenant une valve hydraulique pilotée par une pression régnant dans une chambre du deuxième amortisseur, et inversement.

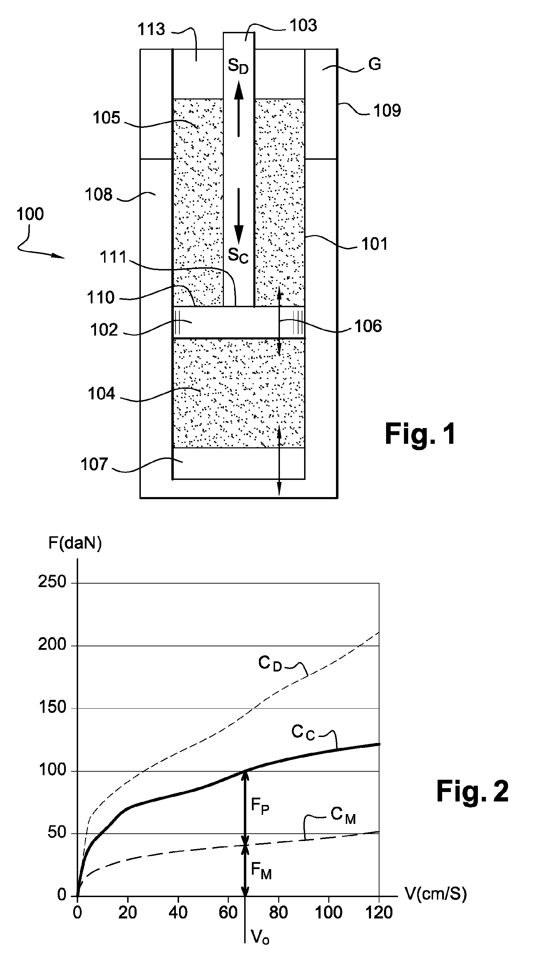

La description d'un amortisseur hydraulique à compensation adaptable pour véhicule, et notamment pour véhicule automobile, est faite en référence à la figure 1.

Un amortisseur 100 utilisé dans un véhicule automobile est constitué essentiellement d'un cylindre 101 dans lequel est monté mobile un piston 102 fixé au bout d'une tige 103 ; ladite tige coulissant dans un palier supérieur 113. Dans un certain nombre de réalisations, le cylindre 101 est fixé sur le châssis du véhicule et l'ensemble tige - piston est monté sur les éléments de suspension des roues du véhicule. Mais le plus souvent, c'est l'ensemble tige - piston qui est fixé sur le châssis du véhicule et le cylindre 101 est monté sur les éléments de suspension des roues du véhicule.

Par ailleurs, le piston 102 est disposé à l'intérieur du cylindre 101 de manière à diviser le cylindre 101 en deux chambres, respectivement de compression 104 et de détente 105, remplies d'un fluide hydraulique peu compressible, avantageusement de l'huile De plus, le piston 102 est pourvu de moyens de mise en communication 106 entre les deux chambres 104, 105 ; lesdits moyens 106 étant destinés à générer une différence de pression entre les deux chambres 104, 105 en fonction des échanges (ou débits) de fluide entre les ces deux chambres 104, 105. Ces moyens 106 permettant le transfert de fluide entre ces deux chambres 104, 105 se présentent généralement sous la forme d'au moins un passage permettant de relier les deux chambres 104, 105 l'une à l'autre. Grâce à cette disposition, lorsque le piston 102 est déplacé à l'intérieur du cylindre 101 sous l'effet des efforts agissant sur la roue ou sur le châssis, ceci engendre un déplacement d'une partie de l'huile d'une chambre à l'autre à travers le passage 106. Le passage 106 étant calibré et/ou muni de clapets, une perte de charge est générée et crée un effort s'opposant au mouvement imposé par la roue et/ou le châssis.

L'huile étant faiblement compressible, le déplacement de l'ensemble tige - piston dans le cylindre 101 n'est possible que si le volume de tige déplacé est compensé. En général, cette compensation est réalisée par la mise en communication, à travers un module de compensation 107, de la chambre 104 non traversée par la tige 103, dite chambre de compression, avec un volume de gaz G compressible disposée au sein d'une chambre de compensation 108.

Pour cela, il est d'usage d'employer une des deux architectures suivantes :

- architecture monotube non représenté : le piston 102 est disposé au sein d'un cylindre 101 ne comprenant qu'une paroi, la chambre de compensation étant disposé également à l'intérieur dudit cylindre 101, dans la chambre de compression 104 avec qui elle est en communication ;
- architecture bi-tube représenté en figure 1 : l'ensemble cylindre 101 et tige - piston est disposé au sein d'un second cylindre 109 autrement appelé corps d'amortisseur. Ainsi la chambre de compensation 108 est formée de la chambre annulaire, située entre le cylindre 101 et le corps 109.

En phase de compression, l'ensemble tige - piston rentre dans le cylindre 101, comme illustré par la flèche $S_C$, comprimant ainsi la chambre de compression 104, disposée entre le piston 102 et le module de compensation 107. De la sorte, le fluide hydraulique est forcé de circuler au travers du piston 102 et du module de compensation 107. Dans cette phase, il est généralement considéré que la section annulaire 110, entre la tige 103 et cylindre 101, pousse le fluide au travers du piston 102, et que la section circulaire 111 de la tige 103 pousse le fluide au travers du module de compensation 107. Le volume de gaz G ménagé dans la chambre de compensation 108 permet d'accueillir le volume de fluide lié au déplacement de la tige 103. La chambre de détente 105 se retrouve alors en dépression, et il convient de garantir que son niveau de pression ne chutera pas trop bas afin d'éviter un phénomène de cavitation à l'intérieur de ladite chambre de détente 105. Dans ce but, le module de compensation 107 impose une perte de charge suffisante au débit de tige pour garantir que la pression en chambre de détente 105 ne chutera pas au dessous de la pression moyenne en chambre de compensation 108.

En phase de détente, l'ensemble tige - piston sort du cylindre 101, comme illustré par la flèche $S_D$, comprimant ainsi la chambre de détente 105, disposée entre le piston 102 et le palier supérieur 113. De la sorte, la chambre de détente 105 est mise en pression et le fluide est forcé au travers du piston 102 vers la chambre de compression 104. Le volume de fluide aspiré par le déplacement de la tige 103 est prélevé dans la chambre de compensation 108, et alimente la chambre de compression 104 au travers du module de compensation 107. Ce module de compensation 107 doit alors imposer le moins de perte de charge possible au fluide, sous peine de mettre en dépression la chambre de compression 104.

La figure 2 est diagramme représentatif de la loi d'amortissement de l'amortisseur hydraulique 100 tel que décrit ci-dessus. Cette loi d'amortissement correspond à l'effort F mesuré sur la tige 103 en fonction de la vitesse V de déplacement de celle-ci par rapport au cylindre 101. Elle se représente sur un diagramme avec en abscisse la vitesse de tige V et en ordonnée l'effort tige F.

Deux courbes distinctes, respectivement $C_C$ et $C_D$, représentent respectivement :

- la phase de compression, la vitesse V correspondant à la vitesse de sortie de la tige 103 du cylindre 101 ; et
- la phase de détente, la vitesse V correspondant à la vitesse de rentrée de la tige 103 dans le cylindre 101.

Cette loi représente un objectif à atteindre en réglant les pertes de charge générées par les moyens de mise en communication 106 du piston 102 et par le module de compensation 107.

En phase de détente, le module de compensation 107 ne génère aucune perte de charge, et tout le réglage se fait par le réglage des moyens de mise en communication 106 du piston 102.

En phase de compression, par contre, l'effort F est généré par les moyens de mise en communication 106 du piston 102 et par le module de compensation 107. Afin de garantir un niveau de pression suffisant en chambre de détente 105 pendant la phase de compression, il faut que l'effort développé par le module de compensation 107 génère au moins l'effort total F multiplié par un facteur f, ledit facteur f s'exprimant selon la relation suivante :

$$ f = \frac{\phi_T^2}{\phi_C^2} $$

où

$\Phi_T$ correspond au diamètre de la tige 103, et
$\Phi_C$ correspond au diamètre du cylindre 101.

Sur la figure 2, la courbe $C_M$ correspond à la contribution du module de compensation 107 à l'obtention de l'effort final F pendant la phase de compression. Ainsi, pour une vitesse $v_0$ donnée de déplacement de la tige 102, l'effort $F_M$ correspond à l'effort développé par le module de compensation 107 et l'effort restant $F_P$ correspond à l'effort développé par le piston 102 ; la somme de ces deux efforts $F_M$, $F_P$ valant l'effort total F à cette vitesse $v_0$ pendant la phase de compression.

Le module de compensation 107 peut être formé d'une valve hydraulique destinée à contrôler le passage de fluide entre la chambre de compensation 108 et la chambre de compression 104. Cette valve 107 assure la génération d'une perte de charge donnée pour un débit donné de fluide circulant entre ces deux chambres 104, 108.

De manière générale, la valve hydraulique 107 comporte des obstacles imposés à l'écoulement du fluide entre deux volumes. Ces obstacles peuvent se présenter sous la forme de :

- systèmes de dimension fixe, du type gicleur ; ou de
- systèmes déformables, formées d'éléments déformables comme des ressorts clapets ou des diaphragmes souples.

Il est connu du document FR 2 628 167 un amortisseur hydraulique comprenant un dispositif de compensation piloté à partir de la pression régnant dans la chambre de détente ; ledit dispositif de compensation comportant plusieurs canaux, un clapet anti retour et des moyens d'ouverture réglable destinés à adapter la compensation. Ces moyens d'ouverture réglable nécessitent l'emploi d'une pièce rainurée coulissant dans un conduit s'étendant radialement et monté sur un ressort solidaire de l'amortisseur ; la dite pièce se déplaçant de manière à faire correspondre les rainures avec deux conduites débouchant respectivement dans les chambres de compensation et de compression.

Ce type de dispositif de compensation présente l'inconvénient d'être encombrant axialement (c'est-à-dire selon l'axe de la tige du piston) du fait de la superposition axiale de la pièce rainurée et des deux conduites débouchant de part et d'autre de ladite pièce rainurée. De plus, cet amortisseur peut présenter des bruits en fonctionnement notamment lorsque la pièce rainurée vient en butée contre le fond de la conduite dans laquelle est coulisse.

La présente invention a notamment pour but de proposer une valve hydraulique palliant ces inconvénients et de conception simple et peu coûteuse.

L'art antérieur peut également être illustré par l'enseignement du document US 5486018 qui divulgue un ensemble de deux amortisseurs couplés entre eux au moyen d'un module de couplage. Ce module de couplage comprend deux chambres hydrauliques raccordées respectivement à l'une et l'autre des chambres de compression des deux amortisseurs, de sorte que la compensation se réalise au niveau de ce module de couplage et permette de s'affranchir des chambres de compensation disposées à l'intérieur de chacun des deux amortisseurs. Ce module de couplage présente néanmoins l'inconvénient d'être volumineux dans un environnement limité.

L'invention propose notamment un ensemble formé de deux amortisseurs couplés entre eux, se passant de module de couplage et permettant ainsi une réduction de l'encombrement.

A cet effet, elle propose une valve hydraulique destinée à contrôler le passage de fluide hydraulique entre une première et une deuxième chambres hydrauliques, consistant en :

- un premier corps creux délimitant intérieurement la deuxième chambre, ladite deuxième chambre débouchant à une extrémité dudit corps creux dans la première chambre ;
- un obturateur formé d'au moins un diaphragme élastiquement déformable en appui sur l'extrémité débouchante dudit corps creux ;
- un deuxième corps creux délimitant intérieurement une troisième chambre remplie de fluide hydraulique et délimitée partiellement par ledit diaphragme, ladite troisième chambre étant sous une pression prédéterminée apte à contrôler la raideur et le point d'ouverture de ladite valve.

Selon une caractéristique, la face inférieure du diaphragme est en appui, par sa partie centrale, sur l'extrémité débouchante du premier corps, ladite extrémité formant une surface d'appui pour ledit diaphragme.

Selon une autre caractéristique, la face supérieure du diaphragme repose, par son bord périphérique, sur le deuxième corps et plus particulièrement sur le pourtour de la troisième chambre en regard de la première chambre.

Conformément à d'autres caractéristiques avantageuses de l'invention:

- le diaphragme est mis en contrainte entre les deux corps et présente une concavité en direction de la troisième chambre ;
- l'obturateur comprend au moins un moyen de contrainte en appui sur l'une et/ou l'autre des faces inférieure et supérieur de la lame ;
- l'obturateur comprend au moins deux diaphragmes pleins et/ou percées empilés l'un sur l'autre ;
- l'obturateur comprend un opercule en contact étanche sur le pourtour de la percée du diaphragme percé ;
- la troisième chambre est mise en communication avec la première chambre.

Selon un mode de réalisation, la troisième chambre est alimentée en fluide par des moyens d'alimentation destiné à contrôler la pression dans ladite chambre.

Selon un autre mode de réalisation, la troisième chambre est alimentée en fluide par une chambre distincte des première et deuxième chambres hydrauliques.

L'invention se rapporte également à un amortisseur hydraulique à compensation adaptable comprenant un cylindre dans lequel est monté mobile un piston fixé au bout d'une tige, ledit piston divisant ledit cylindre en deux chambres, respectivement de compression et de détente, et un module de compensation assurant la mise en communication de la chambre de compression avec une chambre de compensation comprenant un volume de gaz compressible. Selon l'invention, le module de compensation est formé d'une valve hydraulique comme décrit ci avant, où la première chambre est mise en communication avec l'une des chambres de compensation et de compression et la deuxième chambre est mise en communication avec l'autre des chambres de compensation et de compression.

Selon une caractéristique, l'amortisseur hydraulique comprend un organe de commande relié à des moyens d'alimentation en fluide de la troisième chambre de la valve hydraulique, ledit organe de commande étant destiné à contrôler la pression dans ladite troisième chambre.

L'invention se rapporte également à un ensemble formé d'un premier et d'un deuxième amortisseurs hydrauliques chacun conforme à l'amortisseur hydraulique décrit ci-dessus, où la troisième chambre de la valve hydraulique du premier amortisseur est mise en communication avec la chambre de compression du deuxième amortisseur, et où la troisième chambre de la valve hydraulique du deuxième amortisseur est mise en communication avec la chambre de compression du premier amortisseur.

L'invention se rapporte aussi à un amortisseur hydraulique comprenant un cylindre dans lequel est monté mobile un piston fixé au bout d'une tige, ledit piston divisant ledit cylindre en deux chambres, respectivement de compression et de détente, et comprenant des moyens de mise en communication des deux dites chambres de compression et de détente. Selon l'invention, ces moyens de mise en communication sont formés d'une valve hydraulique comme décrit ci-avant, où la première chambre est mise en communication avec l'une des chambres de détente et de compression et la deuxième chambre est mise en communication avec l'autre des chambres de détente et de compression.

D'autres caractéristiques et avantages de la présente invention apparaîtront à la lecture de la description détaillée ci-après, d'un exemple de mise en oeuvre non limitatif, faite en référence aux figures annexées dans lesquelles:

- la figure 1 est une vue schématique d'un amortisseur hydraulique d'architecture bi-tube ;
- la figure 2 est un diagramme représentatif de la loi d'amortissement de l'amortisseur hydraulique représenté en figure 1, avec des courbes représentatives de la détente, de la compression et de la contribution de la compensation dans un tel amortisseur ;
- la figure 3 est un diagramme représentant la pression en fonction du débit dans une valve hydraulique selon l'invention ;
- les figures 4 à 9 représentent en coupe longitudinale six modes de réalisation d'une valve hydraulique selon l'invention ;
- la figure 10 représente un ensemble formé de deux amortisseurs hydrauliques couplés entre eux selon l'invention, chacun des amortisseurs étant équipé d'une valve hydraulique formant module de compensation.

Le comportement hydraulique d'une valve hydraulique se caractérise généralement par une courbe dite de caractéristique hydraulique, représentant la perte de charge entre les deux volumes de fluide en fonction du débit d'écoulement du fluide.

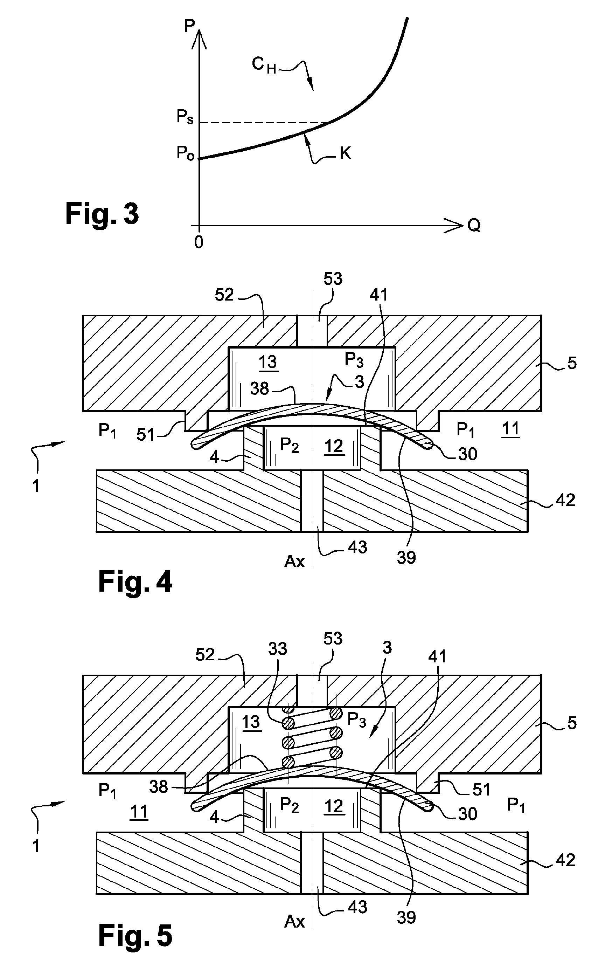

Dans le cas d'une valve hydraulique à système déformable et comme illustré en figure 3, la courbe de caractéristique hydraulique $C_H$ est plus ou moins linéaire, et peut être définie par les trois caractéristiques suivantes de la valve:

- son point d'ouverture $P_0$, qui dépend généralement de la précharge imposée aux éléments déformables, et qui correspond à la pression initiale nécessaire à l'ouverture du mécanisme, la courbe de caractéristique hydraulique $C_H$ variant linéairement à partir de ce point $P_0$,
- sa raideur K qui correspond à la pente de la partie linéaire de la courbe $C_H$, qui dépend de la raideur des éléments déformable, et qui donne la relation entre accroissement de débit et accroissement de pression ; et
- son point de saturation $P_S$, déterminé généralement par la présence de butées des éléments déformables, et qui correspond à la pression au-delà de laquelle le système ne se déforme plus. La courbe $C_H$ prend alors une forme parabolique typique de la caractéristique hydraulique d'un système indéformable. Il est à noter que la saturation peut également être provoquée par la perte de charge générée par les éléments de structure qui supportent le système déformable, on parlera alors de perte de charge de structure ou de traînée.

Les éléments déformables couramment employés dans ces valves hydrauliques se présentent sous la forme d'au moins un diaphragme, dont la raideur est généralement fixée par leur géométrie initiale et le matériau employé.

La description d'une valve hydraulique 1 selon l'invention est faite en référence aux figures 4 à 10.

La valve hydraulique 1 selon l'invention est destinée à générer une différence de pression entre une première 11 et une seconde 12 chambres remplies de fluide hydraulique en fonction des échanges (ou débits) de fluide entre ces deux chambres 11, 12, et de ce fait à contrôler le passage de fluide entre ces deux chambres 11, 12.

Cette valve 1 consiste en:

- un premier corps creux 4 délimitant intérieurement la deuxième chambre 12, cette deuxième chambre 12 débouchant à une extrémité 41 dudit corps creux 4 dans la première chambre 11 ;
- un obturateur 3 formé d'au moins un diaphragme 30 élastiquement déformable en appui sur l'extrémité débouchante 41 dudit corps creux 4 ;
- un deuxième corps creux 5 délimitant intérieurement une troisième chambre 13 remplie de fluide hydraulique et délimitée partiellement par ledit diaphragme 30, ladite troisième chambre 3 étant sous une pression $P_3$ apte à contrôler la raideur K et le point d'ouverture $P_0$ de ladite valve 1.

L'invention propose d'ajuster la raideur K et le point d'ouverture $P_0$ de la valve 1, en fonction du différentiel de pression entre l'une des deux chambres et la troisième chambre 13 dite chambre de contrôle.

En effet, le diaphragme 30 présente deux faces opposées, respectivement supérieure 38 et inférieure 39. Selon l'invention, la face inférieure 39 du diaphragme 30 est en appui, par sa partie centrale, sur l'extrémité débouchante 41 du premier corps 4, ladite extrémité 41 formant ainsi une surface d'appui pour ledit diaphragme 30.

La face supérieure 38 du diaphragme 30 repose, par son bord périphérique, sur le deuxième corps 5 et plus particulièrement sur le pourtour de la troisième chambre 13 en regard de la première chambre 11. Le deuxième corps creux 5 comporte avantageusement un siège annulaire 51 faisant saillie dans la première chambre 11 et délimitant la troisième chambre 13. Dans ce cas, le diaphragme 30 repose, par son bord périphérique, sur ce siège annulaire 51.

Ainsi, le diaphragme 30 forme un couvercle posé sur l'extrémité débouchante 41 du premier corps creux 4 et dont une partie de la face inférieure 39 recouvre la deuxième chambre 12, le bord périphérique dudit diaphragme 30 débordant de ladite extrémité 41 venant en appui, sur la face supérieure 39, sur le siège annulaire 51 du deuxième corps 5.

Les chambres 11, 12, 13 sont donc séparées comme suit:

- la deuxième chambre 12 et la troisième chambre 13 sont disposées de part et d'autre de la partie centrale du diaphragme 30 ;
- la première chambre 11 et la troisième chambre 13 sont également disposées de part et d'autre du bord périphérique du diaphragme 30 ; et
- la première chambre 11 et la deuxième chambre 12 sont disposées de part et d'autre des parois du premier corps creux 4 délimitant ladite deuxième chambre 12.

La disposition particulière des deux surfaces d'appui du diaphragme 30, en l'occurrence le siège annulaire 51 et l'extrémité débouchante 41, et l'épaisseur du diaphragme 30 sont choisis de sorte que le diaphragme 30 est mis en contrainte entre ces deux surfaces 41, 51 et est bombé en direction de la troisième chambre 13. Le diaphragme 30 se trouve ainsi en porte-à-faux entre les deux surfaces d'appui 41, 51.

Selon un mode préféré de réalisation, les différents éléments présentent une symétrie de révolution selon un axe longitudinal AX, en l'occurrence :

- la troisième chambre 13 est avantageusement de forme générale cylindrique centrée sur cet axe AX, et le siège annulaire 51 est en forme générale de couronne circulaire centrée sur cet axe AX ;
- le premier corps 4 est de préférence en forme générale de couronne circulaire centrée sur l'axe longitudinal AX, la première extrémité 41 étant ainsi de forme annulaire et la deuxième chambre 12 étant de forme générale cylindrique centrée sur cet axe AX.

De la sorte, le diamètre extérieur du premier corps 4 est inférieur au diamètre de la surface d'appui 51 du diaphragme 30 sur le deuxième corps 5 (correspondant soit au diamètre interne du siège annulaire 51, soit au diamètre du pourtour circulaire de la troisième chambre 13 sur lequel le diaphragme 30 est en appui). Dans cette configuration préférentielle, le diaphragme 30 est avantageusement en forme de disque circulaire, centré sur cet axe AX. Ainsi, ce diaphragme 30 présente un diamètre supérieur au diamètre de la surface d'appui 51 du diaphragme 30 sur le deuxième corps 5.

En outre, le premier corps 4 comprend un fond 42 sur son côté opposé à l'extrémité débouchante 41, dans lequel est ménagé un orifice débouchant 43 dans la deuxième chambre 12, ledit orifice 43 étant avantageusement centré sur l'axe longitudinal AX. Cet orifice débouchant 43 peut avantageusement assurer la mise en communication de la deuxième chambre 12 avec une chambre externe ou avec des organes hydrauliques, comme par exemple un circuit d'alimentation.

En outre, le deuxième corps 5 comprend un couvercle 52 recouvrant la troisième chambre 13 sur le côté opposé à la surface d'appui 51, dans lequel est ménagé un orifice débouchant 53 dans la troisième chambre 13, ledit orifice 53 étant avantageusement centré sur l'axe longitudinal AX. Le couvercle 52 vient avantageusement de matière avec le deuxième corps creux 5.

Cet orifice débouchant 53 peut avantageusement assurer la mise en communication de la troisième chambre 13 avec une chambre externe ou avec des moyens d'alimentation en fluide hydraulique, comme par exemple une pompe hydraulique ou un circuit d'alimentation. De la sorte, la pression de la troisième chambre 13 peut ainsi être ajustée via cet orifice 53 à la pression de la chambre externe ou à la pression imposée par les moyens d'alimentation, afin de régler la raideur et le point d'ouverture de la valve 1.

Six modes de réalisation d'une valve hydraulique 1 selon l'invention sont représentés aux figures 4 à 9.

Selon un premier mode de réalisation illustré en figure 4, l'obturateur 3 comprend au moins un diaphragme plein 30. On entend par plein le fait que le diaphragme 30 ne présente aucune percée. Ainsi, l'obturateur 3 peut être formé d'un seul diaphragme plein ou d'un empilage de diaphragmes pleins. Ce diaphragme plein 30 est avantageusement de forme circulaire.

Selon un deuxième mode de réalisation illustré en figure 5, l'obturateur 3 comprend un moyen de contrainte 33 disposée dans la troisième chambre 13 et est en appui d'une part sur la face supérieure 38 du diaphragme plein 30 et d'autre part sur le couvercle 52, de sorte à exercer une pression sur la partie centrale dudit diaphragme 30 en direction de la deuxième chambre 12. Avantageusement, ledit moyen de contrainte 33 est un ressort hélicoïdal ou tout autre moyen apte à imposer un effort de contrainte sur la partie centrale du diaphragme plein 30. Le ressort 33 est avantageusement centré sur l'axe longitudinal AX. Selon une variante non représentée, le ressort 33 est disposé dans la deuxième chambre 12, en appui d'une part sur la face inférieure 39 du diaphragme plein 30 et d'autre part sur le fond 42 du premier corps 4, de sorte à exercer une pression sur la partie centrale dudit diaphragme 30 en direction de la troisième chambre 13. Selon une autre variante, l'obturateur 3 comprend les deux moyens de contrainte 33 décrits ci-dessus, avantageusement des ressorts, en appui respectivement sur la face supérieure 38 et inférieure 39 du diaphragme plein 30, de sorte à exercer une pression sur la partie centrale dudit diaphragme 30.

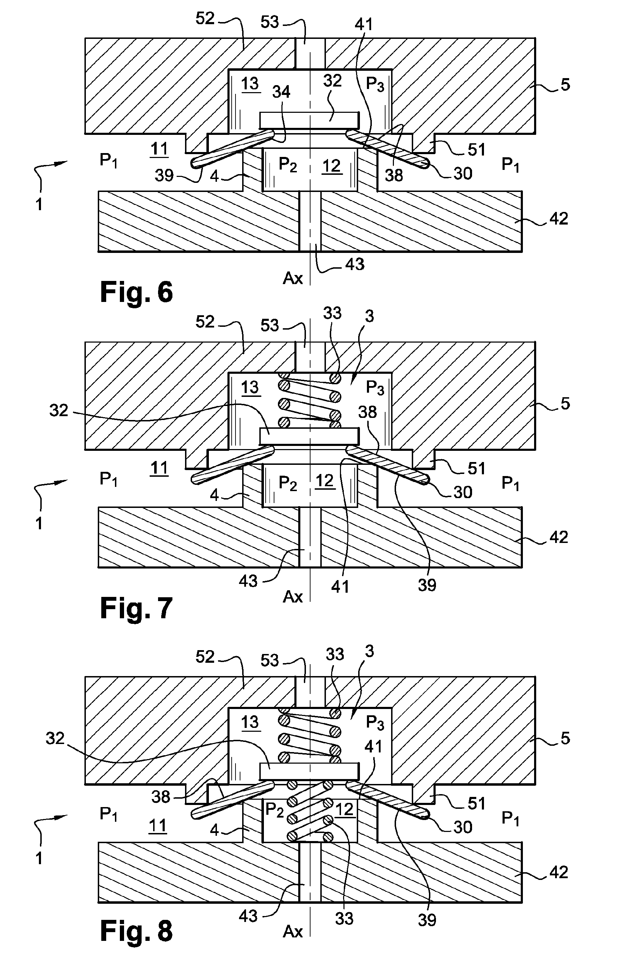

Selon un troisième mode de réalisation illustré en figure 6, l'obturateur 3 est formé de :

- au moins un diaphragme annulaire 30, présentant une percée centrale 34 en regard de la troisième chambre 13 ; et de
- un clapet 32 recouvrant la percée 34 afin d'assurer l'étanchéité entre la deuxième chambre 12 et la troisième chambre 13.

L'obturateur 3 comprend ainsi un seul diaphragme annulaire ou un empilage de diaphragmes annulaires 30. Le clapet 32 est disposé dans la troisième chambre 13, en contact avec la face supérieure 38 du diaphragme annulaire 30 ; la pression $P_3$ de la troisième chambre 13 étant dans ce cas inférieure à la pression $P_2$ de la deuxième chambre 12. Ce diaphragme annulaire 30 est avantageusement en forme générale annulaire.

Selon un quatrième mode de réalisation illustré en figure 7, un moyen de contrainte 33 est en appui d'une part sur la face supérieure du clapet 32 opposée à la deuxième chambre 12 et d'autre sur le couvercle 52, de sorte à exercer une pression sur la partie centrale du diaphragme annulaire 30 via le clapet 32 en direction de la deuxième chambre 12. Avantageusement, ledit moyen de contrainte 33 est un ressort hélicoïdal ou tout autre moyen apte à imposer un effort de contrainte sur le clapet 32. Le ressort 33 est avantageusement centré sur l'axe longitudinal AX.

Selon un cinquième mode de réalisation illustré en figure 8 correspondant à un perfectionnement du quatrième mode de réalisation, un deuxième moyen de contrainte 33, avantageusement un ressort, est en appui sur la face inférieure du clapet 32 de sorte à exercer une pression sur ledit clapet 32 en direction de la troisième chambre 13. Selon une variante non représentée, seule le deuxième moyen de contrainte exerce une pression sur le clapet 32.

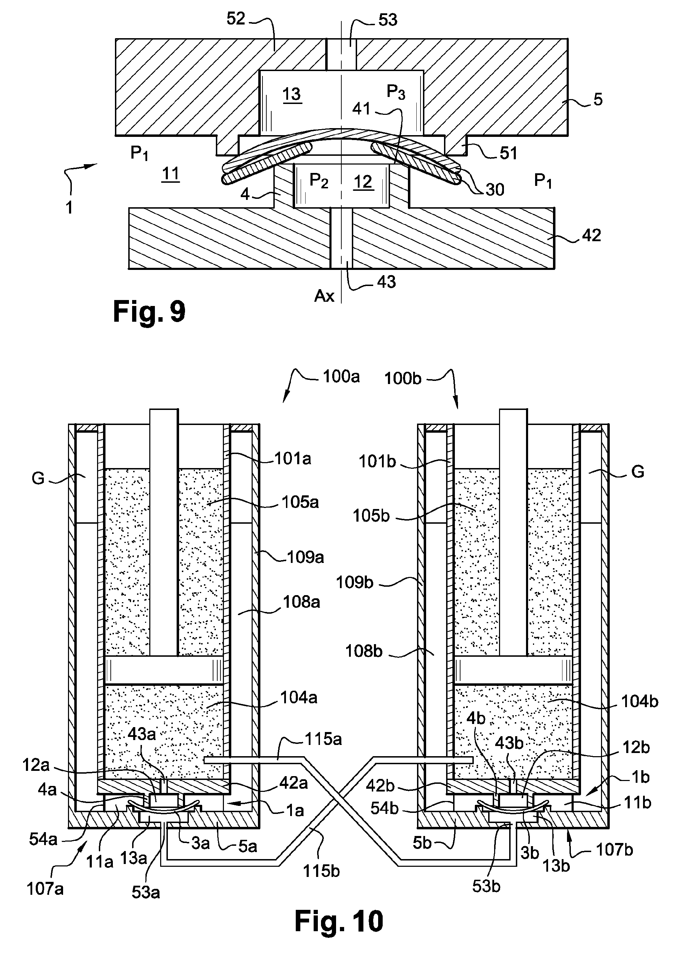

Selon un sixième mode de réalisation illustré en figure 9, l'obturateur 3 est formé d'un empilage de diaphragmes 30 plein et annulaire. Dans l'exemple de la figure 9, l'obturateur 3 est formé d'un diaphragme plein empilé sur un diaphragme annulaire.

Le principe de fonctionnement d'une telle valve 1 est décrit ci-dessous.

La valve 1 régule la perte de charge générée dans un écoulement entre la première 11 et la deuxième 12 chambres, dans les deux sens d'écoulement, en fonction de la pression dans la troisième chambre 13. En fonctionnement, le fluide hydraulique circule entre les deux premières chambres 11,12 quand la différence de pression entre l'une de ces deux chambres 11, 12 et la troisième chambre 13 est telle que le diaphragme 30 décolle de l'extrémité débouchante 41 formant surface d'appui, et laisse libre le passage de fluide entre les deux premières chambres 11, 12 ; la différence de pression entre la première 11 et la deuxième 12 chambres commandant le sens de circulation d'une chambre à l'autre. Quand le fluide circule entre les deux premières chambres 11, 12, l'obturateur 3 est dit ouvert.

La pression $P_3$ de la troisième chambre 13 s'oppose constamment à l'ouverture de l'obturateur 3 en plaquant le diaphragme 3 contre l'extrémité débouchante 41 du premier corps 4. Ainsi, plus cette pression $P_3$ est importante, relativement aux pressions $P_1$ et/ou $P_2$, et plus la valve 1 est raide.

Dans une valve 1 selon l'invention, la perte de charge entre la première 11 et la deuxième chambre 12 augmente lorsque la pression $P_3$ de la troisième chambre 13 augmente, autrement dit la raideur K et le point d'ouverture $P_0$ de la valve 1 augmentent quand $P_3$ augmente.

La partie du diaphragme 30 s'étendant entre le siège annulaire 51 et l'extrémité débouchante 41 du premier corps 4 sépare la première chambre 11 de la troisième chambre 13 ; cette partie étant avantageusement de forme annulaire. Le différentiel de pression entre ces deux chambres 11, 13 s'exerce ainsi sur cette partie annulaire. Ainsi, la pression $P_1$ de la première chambre 11 s'exerce sur cette partie annulaire et tend à déformer le diaphragme 30 pour permettre qu'il décolle de l'extrémité 41 et laisse libre le passage de fluide de la première 11 à la deuxième 12 chambre.

La partie centrale du diaphragme 30, recouvrant la deuxième chambre 12, sépare la deuxième chambre 12 de la troisième chambre 13 ; cette partie centrale étant avantageusement en forme générale de disque. Le différentiel de pression $\Delta P = P_2 - P_3$ entre ces deux chambres 13, 11 s'exerce ainsi sur cette partie centrale et tend également à déformer le diaphragme 30 pour permettre le passage de fluide de la première 11 à la deuxième 12 chambre.

Le fonctionnement de la valve 1 est identique avec un diaphragme 30 plein ou annulaire. Néanmoins, un diaphragme annulaire permet d'une part de concevoir une valve 1 sur une plus grande plage de raideur (ce type de diaphragme étant potentiellement plus souples et moins contraint), et d'autre part d'augmenter le nombre de réglages possibles de la valve 1. En effet, il faut tenir des raideurs du ou des moyens de contrainte, en plus de la pression $P_3$ de la troisième chambre 13, pour régler la raideur et le point d'ouverture de la valve 1.

Dans le cas d'une valve 1 réalisé avec au moins un diaphragme 30 plein, il est possible de régler les caractéristiques hydrauliques de ladite valve en faisant varier les paramètres suivants :

- nombre de diaphragmes pleins 30 empilés ;
- épaisseur du ou des diaphragmes pleins 30 empilés, lesdits diaphragmes pouvant être d'épaisseur distincte entre eux ;
- dimension du ou des diaphragmes pleins 30 empilés, lesdits diaphragmes pouvant être de dimension et/ou de forme distinctes entre eux, le bord extérieur pouvant être circulaire ou non ;
- réalisation d'un cran sur le diaphragme plein 30 au contact de l'une ou l'autre des surfaces d'appui 41, 51 afin de permettre un passage permanent du fluide ;
- dimension (ou diamètre) du siège annulaire 51 ;
- dimension (ou diamètre) de l'extrémité débouchante 41 ;
- réalisation d'un cran sur l'une ou l'autre des surfaces d'appui 41, 51 afin de permettre un passage permanent du fluide ;
- distance axiale entre les deux surfaces d'appui 41, 51, afin de régler la mise en contrainte au repos du ou des diaphragmes 30, et ainsi de fixer la pression d'ouverture de la valve.

Dans le cas d'une valve 1 réalisé avec au moins un diaphragme 30 annulaire, il est possible de régler les caractéristiques hydrauliques de ladite valve 1 en faisant varier les mêmes paramètres que précédemment en plus des paramètres suivants :

- dimension de la percée centrale 34 (ou diamètre interne) du ou des diaphragmes annulaires 30 ;
- charge en place du ou des moyens de contrainte 33, en réglant notamment la raideur du ou des ressorts 33

De nombreuses applications sont envisageables pour une valve 1 telle que décrit ci-dessus.

Il est envisageable par exemple de réaliser une mise en communication de la première chambre 11 et de la troisième chambre 13, de sorte que la valve 1 agisse comme un clapet anti-retour, bloquant le passage de fluide de la deuxième chambre 12 vers la première chambre 11 et ouvrant le passage de fluide dans le sens inverse, c'est-à-dire de la première 11 vers la deuxième 12 chambre.

De plus, une application de cette valve 1 se rapporte aux amortisseurs hydrauliques comprenant une compensation adaptable.

En effet, les amortisseurs de ce type peuvent varier leur loi d'amortissement en fonction des conditions de roulage du véhicule.

Sans une compensation adaptable, les réglages des amortisseurs notamment ceux concernant la compensation des différences de volume de la tige sont optimisés pour chaque véhicule et par conséquent nécessite un tarage et une mise au point spécifique. D'autre part, les ces réglages doivent prévoir les modifications induites par un changement de loi d'amortissement.

Dans le cas de deux amortisseurs disposés par exemple sur le même train d'un véhicule automobile, la valve hydraulique 1 peut former un module de compensation adaptable automatiquement quel que soit l'amortisseur ou la loi d'amortissement dudit amortisseur.

Plus particulièrement, la valve 1 formant module de compensation d'un premier amortisseur peut être piloté par une pression régnant dans une chambre du deuxième amortisseur, et inversement. De la sorte, la compensation d'un amortisseur est couplé à la compensation de l'autre amortisseur afin d'améliorer le comportement dynamique du véhicule.

Un mode de réalisation de cette application est représenté en figure 10, où deux amortisseurs hydrauliques 100a, 100b d'architecture bitube comprennent chacun un module de compensation 107a, 107b formé d'une valve hydraulique 1a, 1 b tel que décrit ci-dessus, les chambres de ladite valve 1a, 1b étant comme suit :

- la première chambre 11a, 11 b est mise en communication avec la chambre de compensation 108a, 108b de l'amortisseur 100a, 100b ; et
- la deuxième chambre 12a, 12b est mise en communication avec la chambre de compression 104a, 104b de l'amortisseur hydraulique 100a, 100b.

Pour le premier amortisseur 100a, le fond 42a du premier corps 4a de la valve 1a forme le fond du cylindre 101a dudit amortisseur 100a, dans lequel est ménagé l'orifice 43a assurant la mise en communication de la deuxième chambre 12a avec la chambre de compression 104a.

De plus, le deuxième corps creux 5a de la valve 1 forme le fond du corps 109a du premier amortisseur 100a, dans lequel est ménagée la troisième chambre 13a. La première chambre 11a est ainsi formée entre ces deux éléments 42a, 5a formant les fonds de respectivement le cylindre 101a et le corps 109a de l'amortisseur 100a.

Ce deuxième corps 5a peut éventuellement être relié au fond 42a du premier corps 4a au moyen de parois longitudinales 54a dans lesquelles sont pratiquées des lumières afin que la première chambre 11a soit en communication avec la chambre de compensation 108a. Les parois longitudinales 54a de liaison forment avantageusement une enceinte de forme cylindrique, centrée sur l'axe longitudinale AX.

Bien entendu, le deuxième amortisseur 100b présente la même configuration.

Pour des amortisseurs d'architecture monotube, le fond 42a du premier corps 4a forme une paroi transversale à l'intérieur du cylindre 101 a, assurant la séparation des chambres de compensation 108a et de compression 104a.

Les deux amortisseurs 100a, 100b sont couplés au moyen de deux conduits hydrauliques 115a, 115b reliant respectivement la chambre de compression 104a, 104b d'un amortisseur 100a, 100b à la troisième chambre 13b, 13a de la valve 1b, 1a formant module de compensation 107b, 107a de l'autre amortisseur 100b, 100a.

Les conduits 115a, 115b sont reliés aux troisièmes chambres 13b, 13a des valves 1b, 1a au moyen de l'orifice 53b, 53a ménagé dans le deuxième corps 5b, 5a de la valve 1b, 1a correspondante.

De la sorte, la chambre de compression 104a du premier amortisseur 100a est mise en communication avec la troisième chambre 13b de la valve 1 b du deuxième amortisseur 100b au moyen du premier conduit 115a ; et la chambre de compression 104b du deuxième amortisseur 100b est mise en communication avec la troisième chambre 13a de la valve 1a du premier amortisseur 100a au moyen du deuxième conduit 115b.

Ainsi, cette solution permet d'ajuster l'effort exercé par les valves 1a, 1 b formant module de compensation 107a, 107b dans les deux amortisseurs 100a, 100b en fonction des niveaux de pression relatif des chambres de compression 104a, 104b de chacun des deux amortisseurs 100a, 100b.

Les deux amortisseur hydrauliques 100a, 100b sont donc couplés d'une manière économique, sans module de couplage central entre les deux dits amortisseurs 100a, 100b.

Dans une telle application aux amortisseurs hydrauliques, chaque amortisseur 100a, 100b comprendra un canal de liaison (non représenté) entre la première 11a, 11 b et la deuxième 12a, 12b chambres, avec un système anti retour permettant le passage libre de la première chambre 11a, 11 b vers la deuxième chambre 12a, 12b (autrement dit de la chambre de compensation 108a, 108b vers la chambre de compression 104a, 104b) et interdisant le passage de la deuxième chambre 12a, 12b vers la première chambre 11a, 11 b de sorte à forcer la passage de fluide de la chambre de compression 104a, 104b vers la chambre de compensation 108a, 108b à travers la valve hydraulique 1. Le canal de liaison et le système anti-retour forme ainsi un clapet dit de réalimentation en détente.

Une deuxième application se rapporte également aux amortisseurs hydrauliques comprenant une compensation adaptable, où le module de compensation est formé d'une valve 1 telle que décrit ci-dessus, ladite valve 1 étant cette fois piloté par une pression hydrostatique venant de l'extérieur de l'amortisseur.

Par exemple, l'amortisseur 100 peut comprendre un dispositif destiné à mesurer le comportement dynamique du véhicule et à envoyer une consigne de pression pour la troisième chambre 13 en fonction dudit comportement dynamique ; ladite pression de consigne étant appliquée dans la troisième chambre 13 au moyen de moyens d'alimentation en fluide hydraulique adéquats.

Avec une telle valve, l'encombrement axial est très faible car les diaphragmes sont très peu encombrants axialement en présentant une faible épaisseur. De plus, une telle valve présente un faible bruit en fonctionnement en employant un ou plusieurs diaphragmes montés en porte-à-faux.

Une troisième application (non représentée) se rapporte à un piston 102 d'amortisseur hydraulique, ledit piston 102 comprenant des moyens de mise en communication 106 entre les chambres de compression 104 et de détente 105. Les moyens de mise en communication 106 peuvent être formés d'une valve hydraulique 1 conforme à celle décrite ci-dessus, la troisième chambre (ou chambre de contrôle) étant par exemple alimentée au travers de la tige 103. La première chambre de la valve est reliée à l'une des chambres de compression 104 et de détente, et la deuxième chambre de la valve 1 est reliée à l'autre des chambres de compression et de détente.

Bien entendu l'exemple de mise en oeuvre évoqué ci-dessus ne présente aucun caractère limitatif et d'autres détails et améliorations peuvent être apportés à la valve et à l'amortisseur selon l'invention, sans pour autant sortir du cadre de l'invention.

**Revendications**

1. Valve hydraulique (1) destinée à contrôler le passage de fluide hydraulique entre une première (11) et une deuxième (12) chambres hydrauliques, consistant en :

    - un premier corps creux (4) délimitant intérieurement la deuxième chambre (12), ladite deuxième chambre (12) débouchant à une extrémité (41) dudit corps creux (4) dans la première chambre (11) ;
    - un obturateur (3) formé d'au moins un diaphragme (30) élastiquement déformable en appui sur l'extrémité débouchante (41) dudit corps creux (4) ;
    - un deuxième corps creux (5) délimitant intérieurement une troisième chambre (13) remplie de fluide hydraulique et délimitée partiellement par ledit diaphragme (30), ladite troisième chambre (3) étant sous une pression (P₃) prédéterminée apte à contrôler la raideur (K) et le point d'ouverture (P₀) de la valve (1),

    **caractérisé en ce que** la face inférieure (39) du diaphragme (30) est en appui, par sa partie centrale, sur l'extrémité débouchante (41) du premier corps (4), ladite extrémité (41) formant une surface d'appui pour ledit diaphragme (30).

2. Valve hydraulique (1) selon la revendication 1, **caractérisé en ce que** la face supérieure (38) du diaphragme (30) repose, par son bord périphérique, sur le deuxième corps (5) et plus particulièrement sur le pourtour de la troisième chambre (13) en regard de la première chambre (11).

3. Valve hydraulique (1) selon la revendication 2, **caractérisé en ce que** le diaphragme (30) est mis en contrainte entre les deux corps (4, 5) et présente une concavité en direction de la troisième chambre (13).

4. Valve hydraulique (1) selon l'une quelconque des revendications 1 à 3, **caractérisé en ce que** l'obturateur (3) comprend au moins un moyen de contrainte (32) en appui sur l'une et/ou l'autre des faces inférieure et supérieur de la lame (30).

5. Valve hydraulique (1) selon l'une quelconque des revendications 1 à 4, **caractérisé en ce que** l'obturateur (3) comprend au moins deux diaphragmes (30) pleins et/ou percées empilés l'un sur l'autre.

6. Valve hydraulique (1) selon la revendication 5, **caractérisé en ce que** l'obturateur (3) comprend un opercule (32) en contact étanche sur le pourtour de la percée (34) du diaphragme percé (30).

7. Valve hydraulique (1) selon l'une quelconque des revendications précédentes, **caractérisé en ce que** la troisième chambre (13) est alimentée en fluide par des moyens d'alimentation destiné à contrôler la pression (P₃) dans ladite chambre (13).

8. Valve hydraulique (1) selon l'une quelconque des revendications 1 à 6, **caractérisé en ce que** la troisième chambre (13) est alimentée en fluide par une chambre distincte des première (11) et deuxième (12) chambres hydrauliques.

9. Valve hydraulique (1) selon l'une quelconque des revendications 1 à 6, **caractérisé en ce que** la troisième chambre (13) est mise en communication avec la première chambre (11).

10. Amortisseur hydraulique à compensation adaptable (100) comprenant un cylindre (101) dans lequel est monté mobile un piston (102) fixé au bout d'une tige (103), ledit piston (102) divisant ledit cylindre en deux chambres, respectivement de compression (104) et de détente (105), et un module de compensation (107) assurant la mise en communication de la chambre de compression (104) avec une chambre de compensation (108) comprenant un volume de gaz (G) compressible, **caractérisé en ce que** le module de compensation (107) est formé d'une valve hydraulique (1) selon l'une quelconque des revendications 1 à 9, où la première chambre (11) est mise en communication avec l'une des chambres de compensation (108) et de compression (104) et la deuxième chambre (12) est mise en communication avec l'autre des chambres de compensation (108) et de compression (104).

11. Amortisseur hydraulique (100) selon la revendication 10, **caractérisé en ce qu'**il comprend un organe de commande relié à des moyens d'alimentation en fluide de la troisième chambre (13) de la valve hydraulique (1), ledit organe de commande étant destiné à contrôler la pression ($P_3$) dans ladite troisième chambre (13).

12. Ensemble formé d'un premier (100a) et d'un deuxième (100b) amortisseurs hydrauliques chacun conforme à l'amortisseur hydraulique selon la revendication 10, **caractérisé en ce que** la troisième chambre (13a) de la valve hydraulique (1a) du premier amortisseur (100a) est mise en communication avec la chambre de compression (1 04b) du deuxième amortisseur (100b), et **en ce que** la troisième chambre (13b) de la valve hydraulique (1 b) du deuxième amortisseur (100b) est mise en communication avec la chambre de compression (1 04a) du premier amortisseur (100a).

13. Amortisseur hydraulique (100) comprenant un cylindre (101) dans lequel est monté mobile un piston (102) fixé au bout d'une tige (103), ledit piston (102) divisant ledit cylindre en deux chambres, respectivement de compression (104) et de détente (105), et comprenant des moyens de mise en communication (106) des deux dites chambres de compression (104) et de détente (106), **caractérisé en ce que** lesdits moyens de mise en communication (106) sont formés d'une valve hydraulique (1) conforme à l'une quelconque des revendications 1 à 9, où la première chambre (11) est mise en communication avec l'une des chambres de détente (105) et de compression (104) et la deuxième chambre (12) est mise en communication avec l'autre des chambres de détente (105) et de compression (104).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

Office européen
des brevets

**RAPPORT DE RECHERCHE EUROPEENNE**

Numéro de la demande

EP 08 30 5085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 600 662 A (HITACHI LTD [JP]; NISSAN MOTOR [JP]) 30 novembre 2005 (2005-11-30) * figures 1,4 * | 1,2,4,5, 9,13 | INV. F16F9/348 F16F9/50 |
| Y | | 7,8,10, 11 | |
| Y | FR 2 576 996 A (DAIMLER BENZ AG [DE]) 8 août 1986 (1986-08-08) * figure 2 * | 7,8 | |
| A | EP 1 182 374 A (KRUPP BILSTEIN GMBH [DE] THYSSEN KRUPP BILSTEIN GMBH [DE]) 27 février 2002 (2002-02-27) * figure 4 * | 1 | |
| Y | DE 40 22 099 C1 (BOGE AG, 5208 EITORF, DE) 12 décembre 1991 (1991-12-12) * figure 4 * | 10,11 | |
| A | GB 519 431 A (OLAER PATENT CO) 27 mars 1940 (1940-03-27) * figure * * page 1, ligne 66 - ligne 76 * | 1 | |

DOMAINES TECHNIQUES RECHERCHES (IPC)

F16F

Le présent rapport a été établi pour toutes les revendications

| Lieu de la recherche | Date d'achèvement de la recherche | Examinateur |
|---|---|---|
| La Haye | 28 mai 2008 | Beaumont, Arnaud |

**EP 1 978 276 A1**

**ANNEXE AU RAPPORT DE RECHERCHE EUROPEENNE**
**RELATIF A LA DEMANDE DE BREVET EUROPEEN NO.**

EP 08 30 5085

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-05-2008

| Document brevet cité au rapport de recherche | | Date de publication | Membre(s) de la famille de brevet(s) | | Date de publication |
|---|---|---|---|---|---|
| EP 1600662 | A | 30-11-2005 | CN | 1721729 A | 18-01-2006 |
| | | | US | 2005263363 A1 | 01-12-2005 |
| FR 2576996 | A | 08-08-1986 | DE | 3503152 A1 | 14-08-1986 |
| | | | GB | 2170572 A | 06-08-1986 |
| | | | IT | 210817 Z2 | 11-01-1989 |
| | | | JP | 4005858 B | 03-02-1992 |
| | | | JP | 61184242 A | 16-08-1986 |
| | | | US | 4653617 A | 31-03-1987 |
| EP 1182374 | A | 27-02-2002 | ES | 2251428 T3 | 01-05-2006 |
| DE 4022099 | C1 | 12-12-1991 | AUCUN | | |
| GB 519431 | A | 27-03-1940 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2628167

- US 5486018 A